# EUROPEAN PATENT SPECIFICATION

(11) **EP 3 560 576 B1**
(45) Date of publication and mention of the grant of the patent: **13.01.2021**
(21) Application number: 19167672.5
(22) Date of filing: 05.04.2019
(51) Int. Cl.: B01D 53/94, B01J 20/02

(54) **USE OF A NITROGEN OXIDE STORAGE MATERIAL AND EXHAUST GAS PURIFICATION METHOD**
VERWENDUNG EINES STICKOXIDSPEICHERMATERIALS UND ABGASREINIGUNGSVERFAHREN
UTILISATION D'UN MATÉRIAU DE STOCKAGE D'OXYDE D'AZOTE ET PROCÉDÉ DE PURIFICATION DE GAZ D'ÉCHAPPEMENT

(30) Priority: 24.04.2018 JP 2018082975; 08.01.2019 JP 2019001170
(43) Date of publication of application: 30.10.2019
(73) Proprietor: TOYOTA JIDOSHA KABUSHIKI KAISHA, Toyota-shi, Aichi-ken 471 8571 (JP)
(72) Inventor: NAGATA, Naoto, Aichi-ken, 471-8571 (JP); SHIMOYAMA, Daisuke, Aichi-ken, 471-8571 (JP)
(74) Representative: J A Kemp LLP

(56) References cited:
- EP-A1- 2 127 731
- WO-A1-2018/123863
- CN-A- 103 447 033

## Description

### TECHNICAL FIELD

The present invention relates to an NOₓ storage material capable of efficiently storing nitrogen oxide (hereinafter, referred to as NOₓ) in the low temperature region, and an exhaust gas purification method using the NOₓ storage material.

### BACKGROUND ART

Recent increasing demand for fuel-efficient vehicles is expected to promote lowering of the exhaust gas temperature. In turn, the challenge is to promote purification of harmful gas components at low temperatures. Among others, NOₓ emission control at a temperature lower than 200°C that is a temperature at which the exhaust gas purification catalyst develops its activity is becoming a large challenge.

The temperature region in which the conventional exhaust gas purification catalyst functions is 250°C or more, and it is therefore difficult to purify NOₓ generated before achieving sufficient warmup, for example, at the time of engine starting. Accordingly, as a means for controlling NOₓ emission from when sufficient warmup is not achieved until reaching a temperature region in which the catalyst functions, studies are being made on, for example, a method of disposing an NOₓ storage material in a first half of the catalyst, holding NOₓ in the NOₓ storage material in a low temperature region where the catalyst does not function, desorbing NOₓ from the NOₓ storage material in a temperature region where the catalyst exhibits activity, and purifying the desorbed NOₓ.

As such a material for storing NOₓ in a low temperature region, Ce₁₋ₓZrₓO₂ is known. In this material, desorption of surface oxygen accompanied by reduction of Ce cation participates in oxidation of NOₓ, and NOₓ is held as a nitrate (nitrite) salt having Ce as the cation. The NOₓ storage properties are further enhanced by making a noble metal including Pt be supported on such a material.

In addition, it has been recently proposed that a material obtained by ion exchanging Pd on to a zeolite compound such as chabazite exhibits high NOₓ adsorption properties (see, Low Temperature NO Storage of Zeolite Supported Pd for Low Temperature Diesel Engine Emission Control, Catal Lett (2016) 146:1706-1711). In this material, NO is molecularly adsorbed to the ion-exchanged Pd cation site, and high low-temperature NOₓ adsorption properties are thereby exerted.

On the other hand, studies are being made on an NOₓ storage material using no platinum group catalyst metal but using various nonmetals and include, for example, a study of Mn having high NO oxidation activity, and it was confirmed that a composite oxide composed of MnOₓ and CeO₂ manufactured by the coprecipitation method exhibits high NOₓ storage performance in a temperature region of 200°C or less.

CN 103 447 033 discloses a method for preparing mesoporous AgGaO₂ photocatalytic material via a sol-gel method with Ga(NO₃)₃ and AgNO₃.

WO 2018/123863 discloses Cu-based delafossite-type oxide that is effective as an exhaust gas catalyst. Cu is placed in a high catalytic activity low-valence state, whereby a Cu-based delafossite-type oxide is provided having high activity. Proposed is a delafossite-type oxide for an exhaust gas purification catalyst, the delafossite-type oxide being represented by general formula ABO₂, and being characterized by including: Cu and Ag in the A site of the general formula; and two or more elements selected from the group consisting of Mn, Al, Cr, Ga, Fe, Co, Ni, In, La, Nd, Sm, Eu, Y, V, and Ti in the B site of the general formula, Ag being included in a proportion of at least 0.001 and less than 20 at.% in the A site of the general formula.

### SUMMARY OF THE INVENTION

### [Problems to be Solved by the Disclosure]

However, even the material described in Non-Paten Document 1 is not yet satisfied in terms of NO_{X} storage capacity at low temperatures. Furthermore, in the composite oxide composed of MnOₓ and CeO₂, an essential requirement for exerting the performance is to contain a transition metal such as manganese, but since harmful effects of such a transition metal itself are pointed out, a material which uses an inexpensive metal without employing a transition metal and temporarily holds NOₓ in a low temperature region of 200°C or less, is demanded. An object of the present invention is to solve these problems and provide an NOₓ storage material having sufficient NOₓ storage capacity even in a low temperature region without using a transition metal.

### [Features for Solving the Problems]

The present invention achieves the object above by the following means.
<1> Use of a composite oxide of silver and gallium in storing NOₓ.
<2> The use according to <1> above, wherein the composite oxide further contains aluminum.
<3> The use according to <1> or <2> above, wherein the composite oxide is a delafossite-type composite oxide.
<4> The use according to any one of <1> to <3> above, wherein the concentration of the composite oxide is 1.7 mmol/g or more.
<5> An exhaust gas purification method including causing an exhaust gas discharged from an internal combustion engine to flow through a NOₓ storage device having NOₓ storage material comprising a composite oxide of silver and gallium and then flow through an exhaust gas purification device having a catalyst metal.
<6> The exhaust has purification method of <5> above, wherein the composite oxide further contains aluminum.
<7> The exhaust has purification method of <5> or <6> above, wherein the composite oxide is a delafossite-type composite oxide.
<8> The exhaust has purification method of <5>, <6> or <7> above, wherein the concentration of the composite oxide is 1.7 mmol/g or more.

### [Effects of the Invention]

The NOₓ storage material described can develop high NOₓ storage capacity at low temperatures, particularly, at a low temperature of 200°C or less.

### BRIEF DESCRIPTION OF THE DRAWINGS

Fig. 1 is a diagram illustrating the reaction mechanism for oxidation of NOₓ on the NOₓ storage material of the present invention.
Fig. 2 is a schematic diagram illustrating the structure of a delafossite-type composite oxide.
Fig. 3 is an XRD diffraction pattern of each sample obtained in Examples.
Fig. 4a is a DF-STEM observation image of Ag3Ga7 composite oxide (Example 1).
Fig. 4b is an EDS mapping image of Ag3Ga7 composite oxide (Example 1).
Fig. 5a is a graph illustrating XAFS analysis results of each sample obtained in Examples 1, 2 and 4, reference sample AgGaO₂, and copper foil.
Fig. 5b is a graph illustrating the results of waveform separation between Ag⁰ and AgGaO₂ at an isosbestic point of Fig. 5a.
Fig. 5c is a graph illustrating quantitative results of each component in Fig. 5b.
Fig. 6 is a graph illustrating an O₂-TPD measurement profile of each sample obtained in Examples 1 to 4 and Comparative Examples 1 and 2.
Fig. 7 is a graph illustrating IR analysis results of each sample obtained in Examples 1, 2 and 4.
Fig. 8a is a graph illustrating the NOₓ storage amount per volume of each sample obtained in Examples 1 to 4 and Comparative Example 1.
Fig. 8b is a graph illustrating the NOₓ storage amount per weight of each sample obtained in Examples 1 to 4 and Comparative Example 1.
Fig. 9 is an XRD diffraction pattern of each sample obtained in Examples.
Fig. 10 is a graph illustrating the relationship between the A1 charging ratio and the lattice length.
Fig. 11 is a graph illustrating the relationship between the temperature and the NOₓ storage amount.
Fig. 12 is a graph illustrating an NOₓ-TPD measurement profile.
Fig. 13 is a graph illustrating an NOₓ-TPD measurement profile.

### MODE FOR CARRYING OUT THE INVENTION

The mode for carrying out the present invention is descried n detail below. However, the present invention is not limited to the following embodiments and can be conducted by making various modifications thereto within the scope of the gist of the present invention.

### <NOₓ Storage Material>

The NOₓ storage material of the present invention contains a composite oxide of silver and gallium. The composite oxide may further contain aluminum. Aluminum substitutes for part of gallium in the composite oxide of silver and gallium.

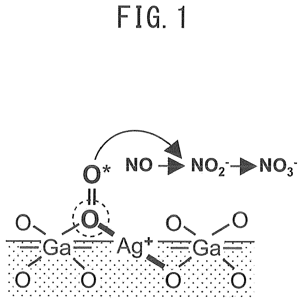

As illustrated in Fig. 1, the NOₓ storage material described contains a composite oxide in which silver (Ag) and gallium (Ga) are dissolved in solid solution, and the Ag-O-Ga site formed in the composite oxide functions as a low-temperature NOₓ storage reaction site. Then, it is considered that oxygen is activated on this site in a low temperature region, particularly, in a low temperature region of 200°C or less and the activated oxygen acts on the generation of nitrite salt (NO₂⁻) and nitrate salt (NO₃⁻) from NO, as a result, NOₓ is oxidatively stored. In addition, the composite oxide may be a composite oxide in which part of gallium in the composite oxide of silver and gallium is substituted by aluminum, and it is here considered that oxygen is activated on Ag-O-Ga(Al) site and NOₓ is oxidatively stored.

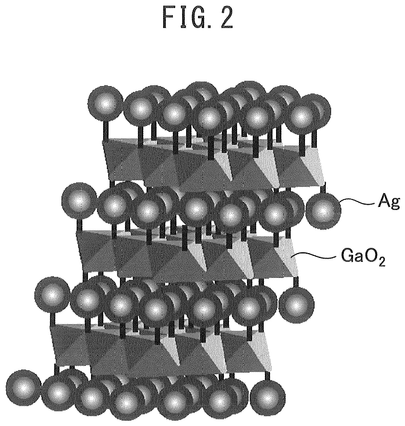

In the composite oxide of silver and gallium contained in the NOₓ storage material of the present invention, the molar ratio between silver and gallium may be from 3:7 to 7:3 or from 4:6 to 6:4, and in the composite oxide of silver, gallium and aluminum, the molar ratio between silver and (gallium+aluminum) may be from 2:8 to 7:3. The composite oxide is preferably a delafossite-type composite oxide. Fig. 2 illustrates a schematic structure of the delafossite-type composite oxide. The delafossite-type structure is represented by AgGaO₂ or AgAlₓGa₁₋ₓO₂ and is composed of monovalent cation Ag⁺, trivalent cation Ga³⁺, Ag³⁺, and oxide ion O⁻. In AgAlₓGa₁₋ₓO₂, x is preferably from 0.1 to 0.9, more preferably from 0.1 to 0.5. The AgGa(Al)O₂ takes on a layered structure in which a Ga(Al)O₂ layer formed by sharing sides of Ga(Al)O₆ octahedron and an Ag layer are alternately stacked. Thanks to such a structure, many Ag-O-Ga sites can be present on the oxide surface and since the site functions as an active site for NOₓ storage reaction, the NOₓ storage performance is high.

In the NOₓ storage material described, the concentration of the composite oxide of silver and gallium may be 1.0 mmol/g or more and is preferably 1.7 mmol/g or more, or 1.8 mmol/g or more. In addition, the concentration may be 2.4 mmol/g or less.

The NOₓ storage material described exhibits higher NOₓ storage capacity than a compound in which palladium is ion exchanged on to a zeolite compound such as chabazite conventionally used as the NOₓ storage material, in a low temperature region, particularly in a low temperature region of 200°C or less, furthermore 100°C or less.

### <Production Method of NOₓ Storage Material>

The NOₓ storage material described can be produced by any method commonly employed as the production method of a composite oxide and in particular, can be produced by the following method.

The method for producing the NOₓ storage material described includes dissolving salts of metals constituting the composite oxide, i.e., a silver salt, a gallium salt and, if desired, an aluminum salt, in a solvent, and baking the solution. As the silver salt, gallium salt and aluminum salt, a nitrate, a carbonate, etc. employed in a general production method of a composite oxide can be used. As the solvent, a solvent capable of dissolving these salts, for example, water, can be used. The silver salt and gallium salt are preferably mixed in a ratio such that the molar ratio of silver and gallium Ag:Ga becomes from 2:8 to 7:3, from 3:7 to 7:3, or from 4:6 to 6:4, and here, part of the gallium, i.e., from 10 to 90 mol% or from 10 to 50 mol%, may be substituted by aluminum.

The baking temperature is usually 250°C or more, preferably 300°C or more, and is 600°C or less, preferably 400°C or less. The baking may be performed in air or in oxygen but is preferably performed in oxygen. The baking time can be appropriately determined according to the balance with the baking temperature and is usually from 1 to 10 hours.

The baking is preferably performed in the presence of a fuel. As the fuel, glycine, glucose, sucrose, urea, citric acid, hydrazine, carbohydrazine, oxalyl dihydrazine, acetylacetone, hexamethylenetetramine, etc. can be used.

### <NOₓ Storage Device>

The NOₓ storage device described has the above-described NOₓ storage material. In the NOₓ storage device described, the NOₓ storage material may be configured to be housed in a case, or the NOₓ storage material may be supported on a support particle and then housed.

The support particle includes particles of a metal oxide such as alumina (Al₂O₃), zirconia (ZrO₂), ceria (CeO₂), silica (SiO₂), magnesia (MgO) and titanium oxide (titania: TiO₂), or a composite oxide thereof (for example, a ceria-zirconia (CeO₂-ZrO₂) composite oxide). Among these, particles of alumina, zirconia, and a ceria-zirconia composite oxide are preferred.

### <Exhaust Gas Purification Method>

The exhaust gas purification method of the present invention includes causing an exhaust gas discharged from an internal combustion engine to flow through the NOₓ storage device above and then flow through an exhaust gas purification device having a catalyst metal.

An exhaust gas discharged from an internal combustion engine is first flowed through the NOₓ storage device and put into contact with the NOₓ storage material, and NOₓ in the exhaust gas can thereby be stored at a low temperature as in starting of the internal combustion engine, particularly, at a low temperature of 100°C. Then, when the exhaust gas reaches a high temperature, NOₓ stored is desorbed from the NOₓ storage material and reduced by flowing through an exhaust gas purification device having a catalyst metal and consequently, the harmful component in the exhaust gas is purified.

As the catalyst metal in the exhaust gas purification device, one or a plurality of metals such as platinum (Pt), rhodium (Rh), palladium (Pd), ruthenium (Ru), iridium (Ir) and osmium (Os) can be used.

Although not particularly limited, the content of the catalyst metal relative to the total volume of the catalyst in the exhaust gas purification device is, usually, appropriately from 0.5 to 10 g/L and is preferably, for example, from 0.5 to 7.0 g/L. If the amount of the catalyst metal supported is too small, the catalytic activity (in particular, oxidation catalytic activity) by virtue of the catalyst metal is insufficient, and on the other hand, if the amount of the catalyst metal supported is too large, the catalyst metal is likely to undergo grain growth and at the same time, a cost disadvantage occurs.

The catalyst in the exhaust gas purification device can be used as a pellet by itself or may be used by disposing it on a substrate. As the substrate, the same substrate as employed in the conventionally known exhaust gas purification catalyst can be used. For example, the substrate is preferably a substrate composed of a heat-resistant material having a porous structure. The heat-resistant material includes a heat-resistant metal such as cordierite, silicon carbide (SiC), aluminum titanate, silicon nitride and stainless steel, an alloy thereof, etc. In addition, the substrate preferably has a honeycomb structure, a foam shape, a pellet shape, etc. Incidentally, as for the outer shape of the substrate as a whole, a cylindrical shape, an elliptic cylindrical shape, a polygonal cylindrical shape, etc. can be employed.

### EXAMPLE

### Example 1 (Ag3Ga7 composite oxide):

2.55 g (15 mmol) of silver nitrate (AgNO₃), 14.0 g (35 mmol) of gallium nitrate n-hydrate (Ga(NO₃)₃·nH₂O) and 1.41 g (19 mmol) of glycine were put in a 200 mL beaker and dissolved by adding 10 mL of distilled water. The resulting solution was placed in a muffle furnace, heated to 350°C at 5.4°C/min and further burned in air at 350°C for 1 hour. The obtained solid was put in a mortar and pulverized, and the obtained powder was then fired at 500°C for 2 hours. The powder was compact-molded at 2 t/cm² to obtain a pellet having a diameter (φ) of 1.0 to 1.7 mm. The composite oxide thus produced at a charging ratio of silver and gallium of 3:7 is referred to as Ag3Ga7 composite oxide in the present description.

### Example 2 (Ag5Ga5 composite oxide):

A pellet was produced in the same manner as in Example 1 using 4.25 g (25 mmol) of silver nitrate (AgNO₃), 10.0 g (25 mmol) of gallium nitrate n-hydrate (Ga(NO₃)₃·nH₂O) and 1.41 g (19 mmol) of glycine.

### Example 3 (Ag7Ga3 composite oxide):

A pellet was produced in the same manner as in Example 1 using 5.95 g (35 mmol) of silver nitrate (AgNO₃), 6.0 g (15 mmol) of gallium nitrate n-hydrate (Ga(NO₃)₃ ·nH₂O) and 1.41 g (19 mmol) of glycine.

### Example 4 (Ag1Ga9 composite oxide):

A pellet was produced in the same manner as in Example 1 using 0.85 g (5 mmol) of · silver nitrate (AgNO₃), 18.0 g (45 mmol) of gallium nitrate n-hydrate (Ga(NO₃)₃·nH₂O) and 1.41 g (19 mmol) of glycine.

### Example 5 (Ag5All.5Ga3.5 composite oxide):

A pellet was produced in the same manner as in Example 1 using 4.25 g (25 mmol) of silver nitrate (AgNO₃), 7.0 g (17.5 mmol) of gallium nitrate n-hydrate (Ga(NO₃)₃·nH₂O), 2.81 g (7.5 mmol) of aluminum nitrate nonahydrate (Al(NO₃)₃·9H₂O) and 0.62 g (8.3 mmol) of glycine.

### Example 6 (Ag5A12.5Ga2.5 composite oxide):

A pellet was produced in the same manner as in Example 1 using 4.25 g (25 mmol) of silver nitrate (AgNO₃), 5.0 g (12.5 mmol) of gallium nitrate n-hydrate (Ga(NO₃)₃ .nH₂O), 4.69 g (12.5 mmol) of aluminum nitrate nonahydrate (Al(NO₃)₃·9H₂O) and 0.62 g (8.3 mmol) of glycine.

### Example 7 (Ag5Ga5 composite oxide):

A pellet was produced in the same manner as in Example 1 using 4.25 g (25 mmol) of silver nitrate (AgNO₃), 10.0 g (25.0 mmol) of gallium nitrate n-hydrate (Ga(NO₃)₃ ·nH₂O) and 0.62 g (8.3 mmol) of glycine.

### Example 8 (Ag5Al0.5Ga4.5 composite oxide):

A pellet was produced in the same manner as in Example 1 using 4.25 g (25 mmol) of silver nitrate (AgNO₃), 9.0 g (22.5 mmol) of gallium nitrate n-hydrate (Ga(NO₃)₃ ·nH₂O), 0.94 g (2.5 mmol) of aluminum nitrate nonahydrate (Al(NO₃)₃·9H₂O) and 0.62 g (8.3 mmol) of glycine.

### Comparative Example 1 (Ga₂O₃):

A pellet was produced in the same manner as in Example 1 using 22.0 g (50 mmol) of gallium nitrate n-hydrate (Ga(NO₃)₃ ·nH₂O) and 1.41 g (19 mmol) of glycine.

### Comparative Example 2 (Ag powder):

A silver powder produced by Wako Pure Chemical Industries, Ltd. was used.

### Comparative Example 3 (Pd-chabazite):

A material obtained by loading 1 wt% of palladium on chabazite (SiO₂/Al₂O₃=13, BET surface area: 504 m²/g) was used.

### <Measurement Method and Evaluation>

With respect to the samples obtained, the properties were measured using the following methods and evaluated.

### (XRD)

The measurement was performed using RINT2000 manufactured by Rigaku Corporation with an X-ray source of CuKα (λ=1.5418 nm) under the conditions of a range from 10 to 90 deg., a step width of 0.02 deg., a tube voltage of 50 kV and a tube current of 300 mA. The diffraction peak positions were compared with known data of JCPDS data file. The crystallite diameter was determined using the Scherrer equation.

### (Specific Surface Area Analysis)

The measurement was performed at 77 K by the nitrogen adsorption/desorption method with use of BELSORP-max-12-N-VP manufactured by MicrotracBEL Corp. The measurement sample was subjected to vacuum pretreatment for 3 hours at 250°C. The specific surface area was calculated from the straight portion f of BET curve.

### (STEM-EDS Mapping Analysis)

Observation was performed under a transmission scanning microscope (STEM) by using JEM-1000 (accelerating voltage: 200 kV) manufactured by JEOL Ltd. The sample powder was dispersed in ethanol, dropped on a copper grid, then dried and measured.

### (XAFS Analysis)

The analysis was performed at BL07 Experimental Station of The Kyushu Synchrotron Light Research Center. The spectrum was measured by a transmission method using an ion chamber by means of an Si (220) double crystal spectrometer.

### (O₂-TPD Analysis)

In the measurement, Belcat A manufactured by MicrotracBEL Corp. was used. 200 mg of the sample powder was accurately weighed and put in a sample tube, 20 Vol% O₂/He was flowed at 30 mL/min, and after the temperature was raised to 500°C and this temperature was maintained for 10 minutes, the system was cooled to 50°C in the same atmosphere. The gas in the tube was substituted by He gas at 50°C, He was then flowed at 30 mL/mi, the temperature was raised to 500°C while heating the sample at 10°C/min, and the O₂ desorption amount was analyzed by TCD.

### (IR Analysis)

In the measurement, Jasco FT/IR-6200 infrared spectrophotometer manufactured by JASCO Corp. was used. A sample and KBr were mixed at a weight ratio of 3:7 in a mortar, 12 mg was accurately weighed and compact-molded into a disk of 8 mm in diameter φ, and the disk was used as the sample. As for the window material, CaF was used. As a pretreatment operation, an operation of flowing a mixed gas of O₂ 3%/Ar balance at a total flow rate of 200 mL/min at 350°C for 5 minutes and subsequently introducing a mixed gas of H₂ 5%/Ar balance for 10 minutes was repeatedly performed. The mixed gas of O₂ 3%/Ar balance at the same flow rate was cooled to the measurement temperature, background measurement was then performed, a mixed gas of NO 400 ppm+O₂ 9%/Ar balance was flowed, and the spectra after 2, 5, 10, 15, 20, 30, 40, 50 and 60 minutes were measured. The measurement temperature was set to be 100°C, and in the measurement range of 1,000 to 4,000 cm⁻¹, 128 co-added scans were collected at 4 cm⁻¹ resolution.

### (NOₓ-TPD Analysis)

In a flow reactor, 1 mL of a pellet catalyst was placed, and each gas at 180°C, 140°C and 100°C was analyzed by an FT-IR analyzer (SESAM-HL, BEST Instruments Co., Ltd.). After evaluating the below-described NOₓ storage properties, the sample was heated at 20°C/min under N₂ flow, and the desorbed NOx species was analyzed.

### (Evaluation of NOₓ Storage Properties)

In a flow reactor, 1 mL of a pellet sample produced in each of Examples and Comparative Examples was placed, and the conversion behavior of each gas at 180°C, 140°C and 100°C was analyzed by an FT-IR analyzer (SESAM-HL, BEST Instruments Co., Ltd.) and a magnetic-pressure analyzer (Bex, BEST Instruments Co., Ltd.). After performing a reduction pretreatment at 500°C for 5 minutes under H₂ flow, the gas was switched to a O₂ 9%+CO₂ 10%+water 10%/N₂ gas, and a pretreatment was performed at the same temperature for 5 minutes. In the same oxidizing atmosphere, the gas was cooled to the evaluation temperature, the lean gas shown in Table 1 below was introduced at 1 L/min for 15 minutes, and the NOₓ storage amount was calculated based on the difference from the NOₓ profile in a blank test where the catalyst was not placed.

**TABLE 1]**

| Gas | NO/ppm | O₂/vol% | CO₂/vol% | H₂O/vol% |
|---|---|---|---|---|
| Density | 400 | 9 | 10 | 10 |

### <Measurement Results>

### (Specific Surface Area)

The composition ratio and specific surface area of each of the samples obtained in Examples and Comparative Examples are shown in Table 2 below.

**TABLE 2**

| Sample | Cation, Molar Ratio/mol% | | | S_{BET}/m²g⁻¹ |
|---|---|---|---|---|
| | Ag | Al | Ga | |
| Ga₂O₃(Comparative Example 1) | 0 | 0 | 50 | 83.0 |
| AglGa9 (Example 4) | 10 | 0 | 90 | 41.0 |
| Ag3Ga7 (Example 1) | 30 | 0 | 90 | 36.0 |
| Ag5Ga5 (Example 2) | 50 | 0 | 50 | 27.0 |
| Ag7Ga3 (Example 3) | 70 | 0 | 30 | 20.0 |
| Ag5Al1.5Ga3.5 (Example 5) | 50 | 15 | 35 | 37.6 |
| Ag5Al2.5Ga2.5 (Example 6) | 50 | 25 | 25 | 64.6 |
| Ag5Ga5 (Example 7) | 50 | 0 | 50 | 22.0 |
| Ag5Al0.5Ga4.5 (Example 8) | 50 | 5 | 45 | 23.6 |
| Pd-Chabazite (Comparative Example 3) | | | | 504.0 |

### (Results of Structural Analysis by XRD)

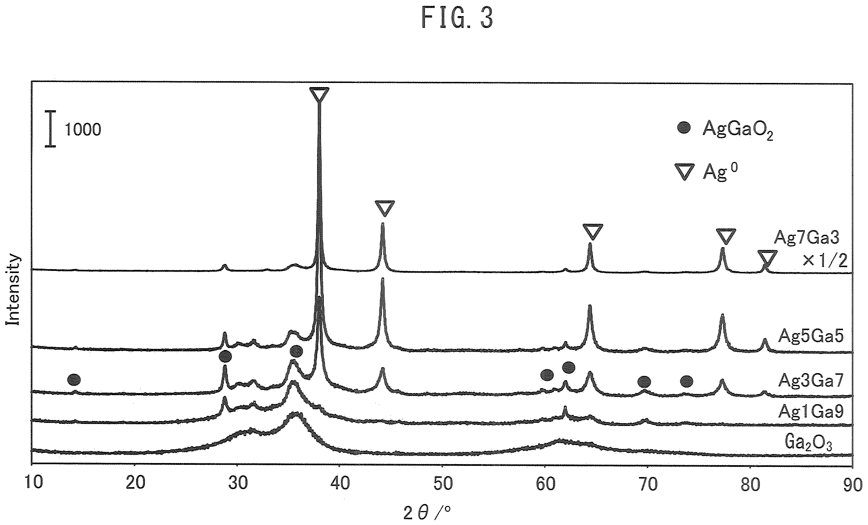

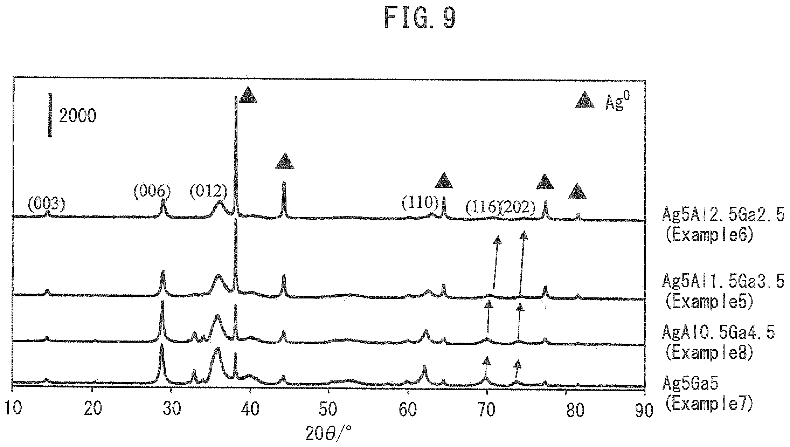

An XRD diffraction pattern of each sample is illustrated in Figs. 3 and 9. As illustrated in Fig. 3, diffraction peaks based on delafossite-type AgGaO₂ oxide were detected in the samples except for Ga₂O₃. In addition, in the Ag3Ga7 composite oxide (Example 1), the diffraction intensity of the oxide above was highest. Furthermore, as illustrated in Fig. 9, a diffraction line of Ag metal was detected in diffraction patterns of all products, as well as delafossite-type AgAlₓGa₁₋ₓO₂, and the products were confirmed to be a mixture of both. Moreover, since the diffraction line of AgAlₓGa₁₋ₓO₂ is shifted to the high angle side as the Al composition ratio increases, it is understood that a structure in which Ga is substituted by Al was produced. It is also suggested that with an increase in the Al ratio, coarse Ag metal increases.

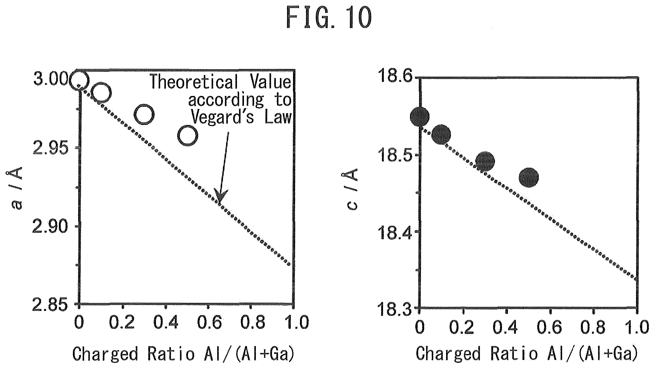

Fig. 10 illustrates the dependency of a lattice parameter calculated from the analysis of Fig. 9 on the Al charging ratio. Both a-axis length and c-axis length are decreased as the Al ratio increases, and it is therefore revealed that a delafossite-type oxide in which part of Ga is substituted by Al was produced. However, the results were not in complete agreement with the theoretical values according to Vegard's Law, and this suggests that part of Al was not substituted by and the oxide was present as Al₂O₃, etc.

### (Results of Structural Analysis by STEM)

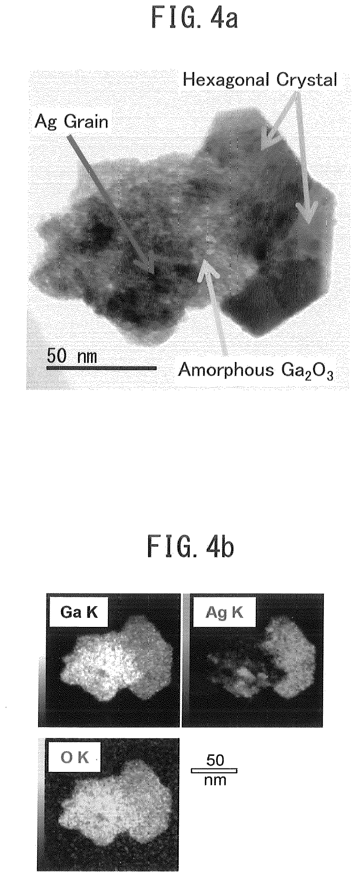

Fig. 4a illustrates a DF-STEM observation image of Ag3Ga7 composite oxide (Example 1), and Fig. 4b illustrates an EDS mapping image thereof. As well as Ag grain and Ga₂O₃, a hexagonal oxide in which the composition distribution of Ag, Ga and O is uniform can be confirmed. This oxide is expected to be the delafossite-type AgGaO₂ oxide detected in the XRD diffraction pattern of Fig. 3.

### (Results of Structural Analysis by XAFS)

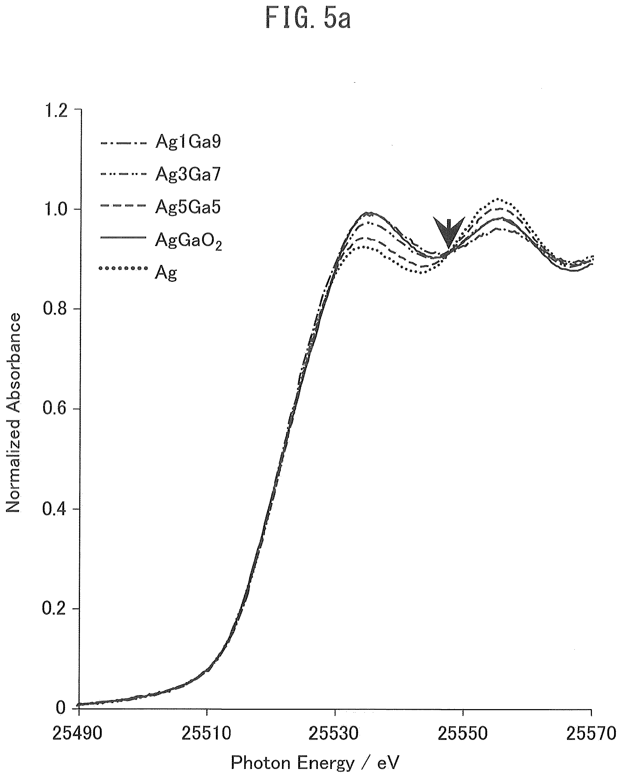

Fig. 5a illustrates XAFS analysis results of samples of Examples 1, 2 and 4, sample of Comparative Example 2, AgGaO₂ as reference sample, and Ag. The absorption spectrum of each sample changes through the isosbestic point in accordance with the difference in the Ag/Ga ratio, and this indicates a change due to difference in the abundance ratio of two components of Ag and AgGaO₂.

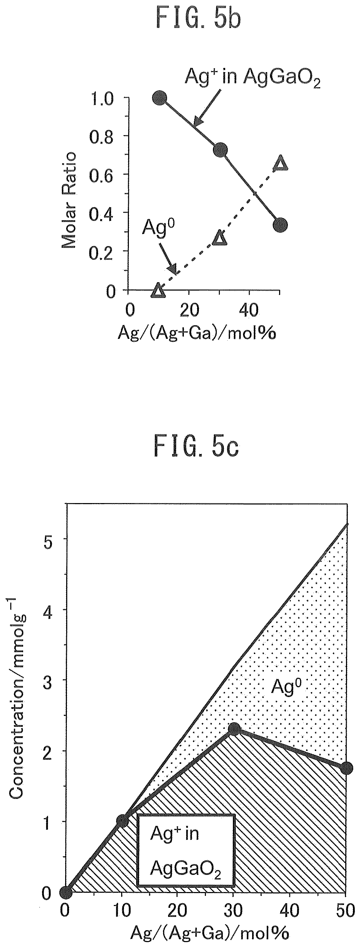

Fig. 5b illustrates the results of waveform separation of the XAFS spectrum of Fig. 5a into spectra of Ag⁰ and AgGaO₂ and calculation of each component fraction. Based on the results of Fig. 5b, Ag component per weight of the material was quantitatively determined. The quantitative determination method was as follows. First, AgGaO₂ was dissolved in aqua regia. Thereafter, the solution was vaporized in ICP, and the Ag concentration was quantitatively determined. The value of Fig. 5c can be derived by multiplying the quantitatively determined Ag concentration by the component fraction calculated in XAFS analysis.

As illustrated in Fig. 5c, it is understood that AgGaO₂ is contained in a largest amount in the Ag3Ga7 composite oxide (Example 1). It is seen from the results of Fig. 5c that when Ag is 20 mol%, AgGaO₂ is present in an amount of 1.7 mmol per g of the sample; when Ag is 10 mol%, AgGaO₂ is present in an amount of 1.0 mmol per g of the sample; when Ag is 30 mol%, AgGaO₂ is present in an amount of 2.4 mmol per g of the sample; and when Ag is 50 mol%, AgGaO₂ is present in an amount of 1.8 mmol per g of the sample.

### (O₂-TPD Analysis Results)

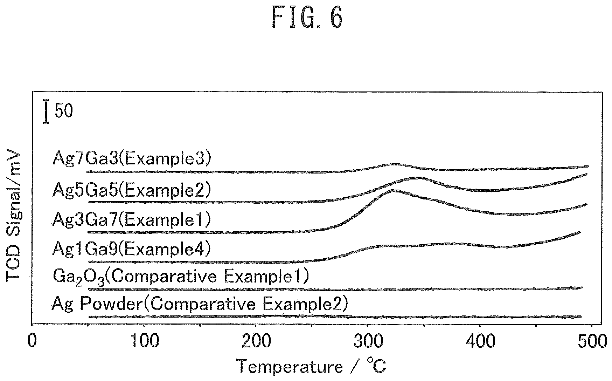

Fig. 6 illustrates an O₂-TPD measurement profile. As illustrated in Fig. 6, a desorbed species was not detected in Ga₂O₃ (Comparative Example 1) and Ag powder (Comparative Example 2), but on the other hand, an oxygen desorption peak was detected around 320°C in AgGaO₂-containing composite oxides (Examples 1 to 4). This desorption peak is considered to be active oxygen desorbed from the Ag-O-Ga site.

### (Analysis Results of NOₓ Adsorption Species by IR)

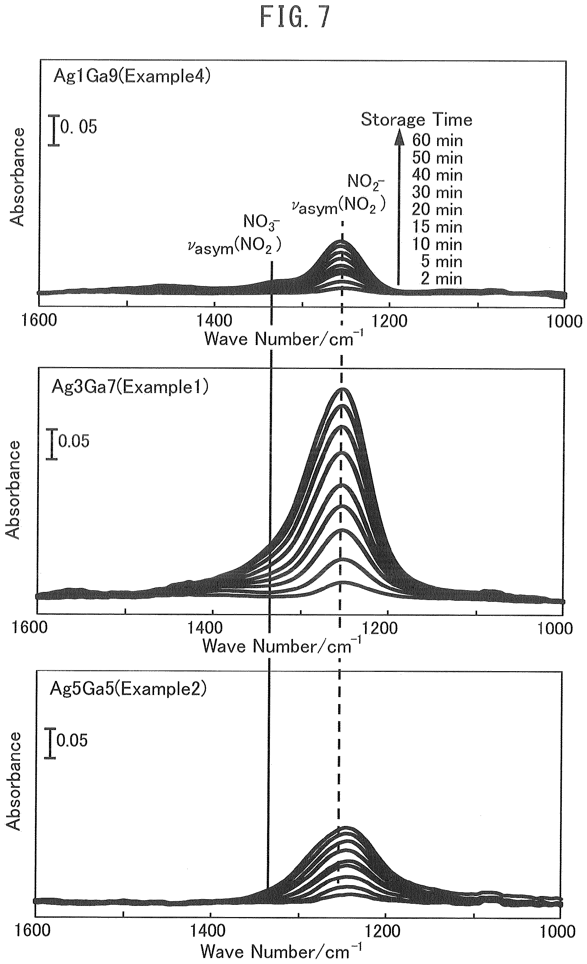

Fig. 7 illustrates IR analysis results in an environment where NO and O₂ were flowed at 100°C, with respect to the samples of Examples 1, 2 and 4. An absorption peak assigned to nitrite salt (NO₂⁻) and a shoulder assigned to nitrate salt (NO₃⁻) were detected at 1,255 cm⁻¹. These results reveal that the gas phase NO was oxidized by oxygen and stored as nitrite salt and nitrate salt in the sample.

### (NOₓ Storage Test Results)

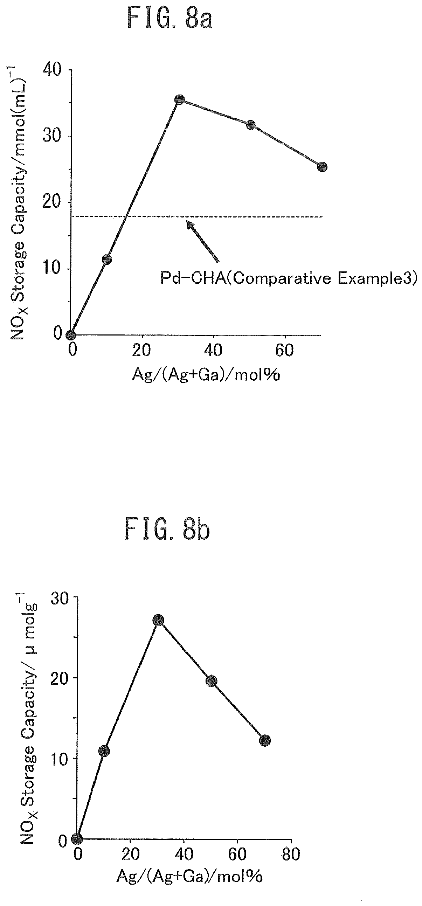

Figs. 8a and 8b illustrate quantitative values of the NOₓ storage amount at 100°C with respect to each sample of Examples 1 to 4 and Comparative Examples 1 and 3. Fig. 8a illustrates the NOₓ storage amount per volume of the sample, and Fig. 8b illustrates the NOₓ storage amount per weight of the sample. The relationship between the NOₓ storage amount per volume or weight of the sample and the Ag composition ratio illustrated in Figs. 8a and 8b showed a tendency to increase in the NOₓ storage amount due to combining Ag and Ga and configure a mountain shape with Ag/(Ag+Ga)=30 mol% at the top. It is revealed that the sample having a large storage amount (Ag3Ga7: Example 1, Ag5Ga5: Example 2, Ag7Ga3: Example 3) allows the presence of many effective sites for NOₓ storage and exhibits high properties in terms of the storage amount per volume, compared with Pd-chabazite known to have high low-temperature NOₓ storage properties (Fig. 8a). In addition, the sample Ag1Ga9 (Example 4) also exhibited sufficient storage amount, though the NOₓ storage amount was lower than Pd-chabazite. The order of NOₓ storage amount per weight relative to the Ag/(Ag+Ga) composition was completely in agreement with the order of the AgGaO₂ content (Fig. 5c) and therefore, AgGaO₂ is expected to assume the storage reaction.

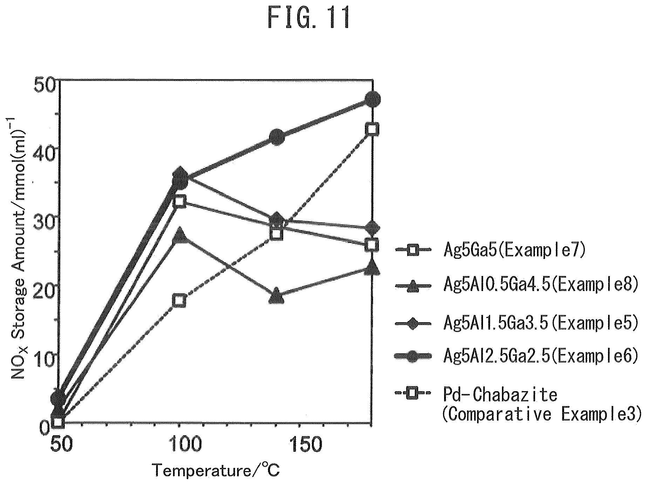

Fig. 11 illustrates the NOₓ storage amounts at 50°C, 100°C, 140°C and 180°C of each sample of Examples 5 to 8 and Comparative Example 3 (Pd-chabazite). Comparing with Ag5Ga5 (Example 7), in Ag5Al0.5Ga4.5 (Example 8), the NOₓ storage amount was low in the temperature region of 120 to 180°C but the NOₓ storage amount was high at a temperature of 100°C or less. In Ag5Al1.5Ga3.5 (Example 5) and Ag5Al2.5Ga2.5 (Example 6), where the Al ratio was further lager than in Ag5Al0.5Ga4.5 (Example 8), the NOₓ storage amount was higher than Ag5Ga5 (Example 7) in the temperature region of 140°C or less. Furthermore, in Ag5Al2.5Ga2.5 (Example 6), the NOₓ storage amount was higher than Pd-chabazite (Comparative Example 3) in entire temperature region of 180°C or less.

### (NOₓ-TPD Analysis Results)

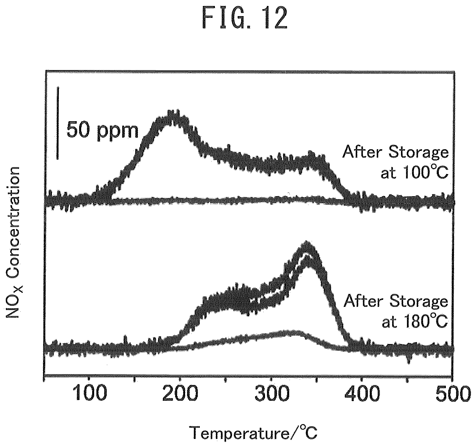

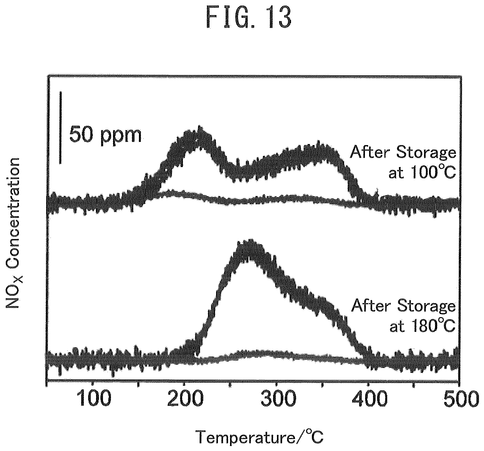

Fig. 12 illustrates an NOₓ-TPD measurement profile of Ag5Ga5 (Example 7), and Fig. 13 illustrates an NOₓ-TPD measurement profile of Ag5Al2.5Ga2.5 (Example 6). In both samples, an NOₓ species exhibiting a desorption peak at 180°C and an NOₓ species undergoing desorption in a higher temperature region than that were detected. The former NOₓ species undergoing desorption on the low temperature side was assigned to nitrite salt (NO₂) having low thermal stability, and the NOₓ species undergoing desorption on the high temperature side was assigned to nitrate salt (NO₃⁻). On the other hand, in the NOₓ-TPD measurement profile after storage at 180°C, desorption of nitrate salt on the high temperature side was predominated in both samples.

These results indicate that when part of Ga is substituted by Al, a large amount of nitrate salt is produced at 180°C, and it is presumed that the reason therefor is because the reactivity in oxide or of surface oxygen was increased and the conversion rate from nitrite salt with low thermal stability to nitrate salt with high thermal stability was thereby more accelerated than the desorption rate of nitrous acid.

## Claims

1. Use of a composite oxide of silver and gallium in storing NOₓ.

2. The use according to claim 1, wherein the composite oxide further contains aluminum.

3. The use according to claim 1 or 2, wherein the composite oxide is a delafossite-type composite oxide.

4. The use according to any one of claims 1 to 3, wherein the concentration of the composite oxide is 1.7 mmol/g or more.

5. An exhaust gas purification method comprising causing an exhaust gas discharged from an internal combustion engine to flow through a NOₓ storage device having NOx storage material comprising a composite oxide of silver and gallium and then flow through an exhaust gas purification device having a catalyst metal.

6. The exhaust gas purification method of claim 5, wherein the composite oxide further contains aluminum.

7. The exhaust gas purification method of claims 5 or 6 wherein the composite oxide is a delafossite-type composite oxide.

8. The exhaust gas purification method of claims 5, 6 or 7 wherein the concentration of the composite oxide is 1.7 mmol/g or more.

## Patentansprüche

1. Verwendung eines Kompositoxids aus Silber und Gallium beim Speichern von NOₓ.

2. Verwendung nach Anspruch 1, wobei das Kompositoxid ferner Aluminium enthält.

3. Verwendung nach Anspruch 1 oder 2, wobei das Kompositoxid ein Delafossit-artiges Kompositoxid ist.

4. Verwendung nach einem der Ansprüche 1 bis 3, wobei die Konzentration des Kompositoxids 1,7 mmol/g oder mehr beträgt.

5. Abgasreinigungsverfahren, umfassend das Verursachen, dass ein Abgas, das aus einem Verbrennungsmotor abgelassen wird, durch eine NOx-Speichervorrichtung mit NOₓ-Speichermaterial strömt, umfassend ein Kompositoxid aus Silber und Gallium, und dann durch eine Abgasreinigungsvorrichtung mit einem Katalysatormetall strömt.

6. Abgasreinigungsverfahren nach Anspruch 5, wobei das Kompositoxid ferner Aluminium enthält.

7. Abgasreinigungsverfahren nach Ansprüchen 5 oder 6, wobei das Kompositoxid ein Delafossit-artiges Kompositoxid ist.

8. Abgasreinigungsverfahren nach Ansprüchen 5, 6 oder 7, wobei die Konzentration des Kompositoxids 1,7 mmol/g oder mehr beträgt.

## Revendications

1. Utilisation d'un oxyde composite d'argent et de gallium dans le stockage de NOₓ.

2. Utilisation selon la revendication 1, dans laquelle l'oxyde composite contient en outre de l'aluminium.

3. Utilisation selon la revendication 1 ou 2, dans laquelle l'oxyde composite est un oxyde composite de type délafossite.

4. Utilisation selon l'une quelconque des revendications 1 à 3, dans laquelle la concentration en l'oxyde composite est de 1,7 mmol/g ou plus.

5. Procédé d'épuration de gaz d'échappement, comprenant l'entraînement de l'écoulement d'un gaz d'échappement, évacué à partir d'un moteur à combustion interne, à travers un dispositif de stockage de NOₓ ayant un matériau de stockage de NOₓ comprenant un oxyde composite d'argent et de gallium, et puis de l'écoulement, à travers un dispositif d'épuration de gaz d'échappement ayant un métal catalyseur.

6. Procédé d'épuration de gaz d'échappement selon la revendication 5, dans lequel l'oxyde composite contient en outre de l'aluminium.

7. Procédé d'épuration de gaz d'échappement selon les revendications 5 ou 6, dans lequel l'oxyde composite est un oxyde composite de type délafossite.

8. Procédé d'épuration de gaz d'échappement selon les revendications 5, 6 ou 7, dans lequel la concentration en l'oxyde composite est de 1,7 mmol/g ou plus.
